Europäisches Patentamt

European Patent Office

Office européen des brevets

(11) Publication number: **0 064 215**
**B1**

## (12) EUROPEAN PATENT SPECIFICATION

(45) Date of publication of patent specification: **10.07.85**

(21) Application number: **82103307.3**

(22) Date of filing: **20.04.82**

(51) Int. Cl.⁴: **F 16 D 65/02,** F 16 D 65/09, F 16 D 51/22

(54) A brake spider.

(30) Priority: **30.04.81 US 259262**

(43) Date of publication of application:
**10.11.82 Bulletin 82/45**

(45) Publication of the grant of the patent:
**10.07.85 Bulletin 85/28**

(84) Designated Contracting States:
**BE CH DE FR GB IT LI SE**

(56) References cited:
**FR-A-2 138 798**
**GB-A- 300 878**
**US-A-2 957 706**
**US-A-3 650 360**
**US-A-4 157 747**
**US-A-4 219 923**

(73) Proprietor: **Rockwell International Corporation**
**600 Grant Street**
**Pittsburgh Pennsylvania 15219 (US)**

(72) Inventor: **Dozier, Leonard Campbell**
**1493 Yosemite**
**Birmingham Michigan 48008 (US)**

(74) Representative: **Leiser, Gottfried, Dipl.-Ing. et al**
**Patentanwälte Prinz, Bunke & Partner**
**Ernsberger Strasse 19**
**D-8000 München 60 (DE)**

Courier Press, Leamington Spa, England.

## Description

This invention relates to a spider for a brake as defined in the pre-characterizing portion of claim 1.

A spider of this type is known from US—A—3,650,360. It is intended for use in a drum brake which is found in heavy duty truck and trailer axle configurations and includes dual web brake shoes and an actuation means which is supported at a location axially separated from the location for the support of the pivotal end of the brake shoes. The brake shoes have adjacent ends pivotally mounted on a pair of pivot pins supported by the brake spider which is secured to the axle spindle. A rotatable actuating cam is mounted at the opposite end of the spider and disposed between the other ends of the brake shoes. Rotary movement of the cam causes each of the brake shoes to move outwardly about the pivot pins to contact the inwardly facing friction surface of the brake drum.

For such heavy duty installations, the brake shoes are relatively wide and are commonly of the dual web type. Typically, each dual web brake shoe is supported at its pivotal end by structure which is centrally located on the brake shoe and the ends of each pivot pin extend outwardly from opposite sides of the support to be received within web bores or recesses in each of the webs. The webs at the other end of each brake shoe support a roller means therebetween which makes rolling contact with the actuating cam and receives the actuation force therefrom. However, the actuating cam cannot be supported at a location between the brake shoe webs, as can the pivot pins, because the rotatable cam is physically positioned in this region. Therefore, the support for the rotary cam actuation means is typically axially separated from a location between the webs and central of the brake shoes. As a result, brake spiders utilized in brakes of this type include support structure which is aligned between the webs of shoes at one end and which is offset to support the rotary cam actuation means at the other end.

U.S Patent Numbers 2,167,607; 2,957,706; 3,131,583 and 4,157,747 disclose brake spider configurations of this type and are usually forged to provide a thickened, reinforced structure having sufficient strength to withstand the axially separated forces acting on the spider during braking operation. While brake spiders of this type have been satisfactorily employed for a number of years, it is alway desirable to reduce the overall weight of such heavy duty brake installations and to reduce the cost of their manufacture and assembly.

It is an object of this invention to provide a spider for a brake to be utilized at the wheel end of a heavy duty truck or trailer axle which is relatively light, inexpensive to manufacture and easy to install on the axle.

In accordance with the invention, a spider for a brake to be utilized at the wheel end of a heavy duty truck or trailer axle, said brake including a drum mounted for rotation with the wheel and a pair of brake shoes including a dual web support structure centrally located thereon, one end of said web support structure at each said brake shoe being supported by pivot pin means and the other end of said dual web support structure of each said brake shoe including means to be acted upon by a brake actuation means, said brake actuation means being supported at a support location axially separated from the central location of said dual web support structure of said brake shoe, said spider including:

a pivoting end support plate having an opening at one end thereof for the receipt of the axle therein, said pivoting end support plate being secured to said axle at a first axial location thereon at said opening to extend radially, outwardly from said axle, said pivoting end support plate having an extended end thereof for supporting said pivot pin means; and

an actuation support plate having an opening at one end thereof, said actuation support plate being mounted on said axle at said opening at a second axial location which is axially separated from said first axial location, said actuation support plate being mounted to extend radially, outwardly of said axle to position an extended end thereof at a circumferential location about said axle which is directly opposite said extended end of said pivoting end support plate, said actuating support plate having at its said extended end a means for supporting said actuation means, is characterized in that said pivoting end support plate and said actuation support plate are secured to each other by a pair of side plates extending axially at each side of the axle adjacent said openings. Particular embodiments of the invention are defined in the dependent claims.

Further features and advantages of the invention stand out from the following description of preferred embodiments with reference to the drawings wherein:

Figure 1 is a sectional side view of a drum brake including a prior art spider.

Figure 2 is an end view of the drum brake as shown in Figure 1 including the prior art spider.

Figure 3 is an end view of the preferred spider including various features of the invention.

Figure 4 is a side elevational view of the preferred embodiment as shown in Figure 3.

Figure 5 is an exploded fragmentary view of the edge of an opening in one of the plates of the preferred spider as shown in Figures 3 and 4 prior to being installed on the axle.

Figure 6 is an exploded fragmentary view of the edge of one of the plates as shown in Figure 5 and as installed on the axle.

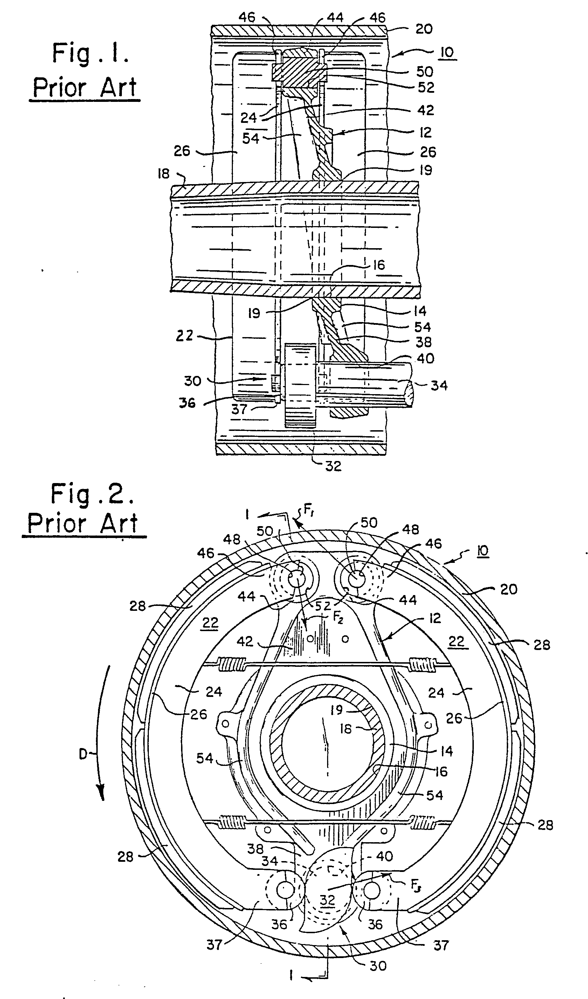

As seen in Figures 1 and 2, a drum brake assembly 10 includes a prior art brake spider 12 and is typical of the type of brakes found in heavy duty trucks and trailers. The spider 12 includes a central portion 14 having an opening 16 therethrough and being mounted on an axle 18 or spindle thereof. The axle 18 extends through the opening 16 as the central portion 14 is welded to the axle 18 at both edges 19 at opposite ends of the opening 16. A brake drum 20 is mounted to a wheel (not shown) which is rotatably mounted on the spindle of the axle 18 in a manner well known in the art.

The brake drum assembly 10 for such heavy duty applications commonly utilizes a pair of brake shoes 22 which are dual web fabricated brake shoes, i.e., each brake shoe 22 includes a pair of axially spaced webs 24 secured to a table 26. The webs 24 are flat in a radial direction and curved in a longitudinal or circumferential direction. The brake shoe table 26 is curved in the circumferential direction and the webs 24 are welded in parallel relationship along the interior curved portion of the table 26 at a central location thereon. This provides a rigid assembly of parts to which the friction lining pad 28 may be secured by rivets or by chemical bonding to complete the formation of shoe 22.

To selectively move the brake shoes 22 outwardly to produce frictional engagement with the interior of the brake drum 20, an actuation means 30 is provided. In the brake assembly 10, the actuation means 30 is in the form of a rotary cam actuator which includes a cam 32 which is rigidly secured to a cam shaft 34. The cam shaft 34 can be rotated by means (not shown) which are well known in the brake art to cause the cam 32 to rotate outwardly displacing the brake shoes 22 for braking engagement with the interior of the drum 20. The brake shoes 22 include rollers or cam followers 36 at the end 37 thereof adjacent the cam 32 to allow smooth application of the force generated by rotation of the cam 32 to each of the brake shoes 22.

A first end 38 of the prior art spider 12 includes an opening 40 therethrough for support of the cam shaft 34 as the cam 32 extends from one end thereof to be centrally aligned with the brake shoes 22. The opening 40 may be provided any form of bushing or bearing, including lubrication fittings (not shown), well known in the art to allow free rotation of the cam shaft 34 therein.

The other end 42 of the prior art spider 12 is axially offset from the first end 38 to be aligned with a region between the webs 24 of the brake shoes 22. Specifically, the end 42 of the spider 12 has a radially outward region thereof which includes two bosses 44 having outwardly facing surfaces which are a predetermined distance apart to be spaced between the parallel webs 24 of each brake shoe 22. In this manner, the bosses 44 properly receive the webs 24 on each side thereof to prevent undesired axial movement of the brake shoes 22 during and after assembly.

An end 46 of the brake shoe 22 is designed to be supported for pivotal movement in response to the outward movement of the end 37 of the brake shoe 22 as it is selectively moved by the cam 32. The end 46 is provided aligned open recesses 48 in the adjacent ends 46 of each web 24. The end 42 of the brake spider 12 includes two circumferentially spaced pivot pins 50 with each being associated with one of the dual web brake shoes 22. The pivot pins 50 are slip fit into holes 52 in the end 42 of spider 12 to extend axially from the bosses 44 at opposite sides of the end 42 of the spider 12 to be capable of receiving the open recesses 48 thereabout for pivotally supporting the dual web brake shoes 22 thereon.

Since it would be possible to provide a different form of pivot pin which is press fit or otherwise rigidly secured in the holes 52, the spider 12 could be utilized with a pair of brake shoes which have matching holes at the pivotal end thereof rather than simple open recesses 48. This different type of pivot pin would be installed in the holes 52 after the brake shoes are positioned adjacent the bosses 44.

On the other hand, since the brake shoes 22 include open receeses 48, it would be possible for the pivot pins 50 to be replaced with integrally formed pivot posts which would extend outwardly from the opposite sides of the spider 12.

As thus explained, the prior art spider 12 is capable of supporting the various elements of the brake 10 and has been satisfactorily employed in the heavy duty truck and trailer art. The spider 12 is typically forged of AISI 1040 steel with a yield strength of 2896 bar and includes ridges 54 to add to the overall strength of the spider 12. To firmly mount the spider 12 on the axle 18, the opening 16 is closely received about the exterior of the axle 18 and has sufficient axial thickness to add rigidity in this region after the welding at the edges 19. Consequently, when the spider 12 is tested under simulated operating conditions by repeatedly applying large outside forces thereto, the failure of the spider 12 does not occur at the opening 16 but at a region thereon as indicated by the letter R.

In fact, in order to determine the forces created on the spider during an extreme braking condition, a computer study has been run and indicates that the worst case condition exists when the brake is being applied to prevent rotation of the drum in the direction indicated by the arrow D. Under this condition, the forces acting on the spider 12 at the pivot pins 50 would be in a direction as indicated in Figure 2 by the arrows F1 and F2 and would have a force magnitude of 120100 N and 71200 N respectively. Similarly, at the other end of the spider 12 where the actuation means in the form of the cam actuator 32 is supported, the force would be in a direction as indicated by the arrow F3 and the magnitude would be 62300 N. Since, as mentioned hereinabove, the ends 38 and 42 of the spider 12 are axially offset one from the other, it can be seen that the bending forces created on the spider 12 are significant and that failure to take these bending forces into consideration when designing the spider 12 would easily cause its failure during operation.

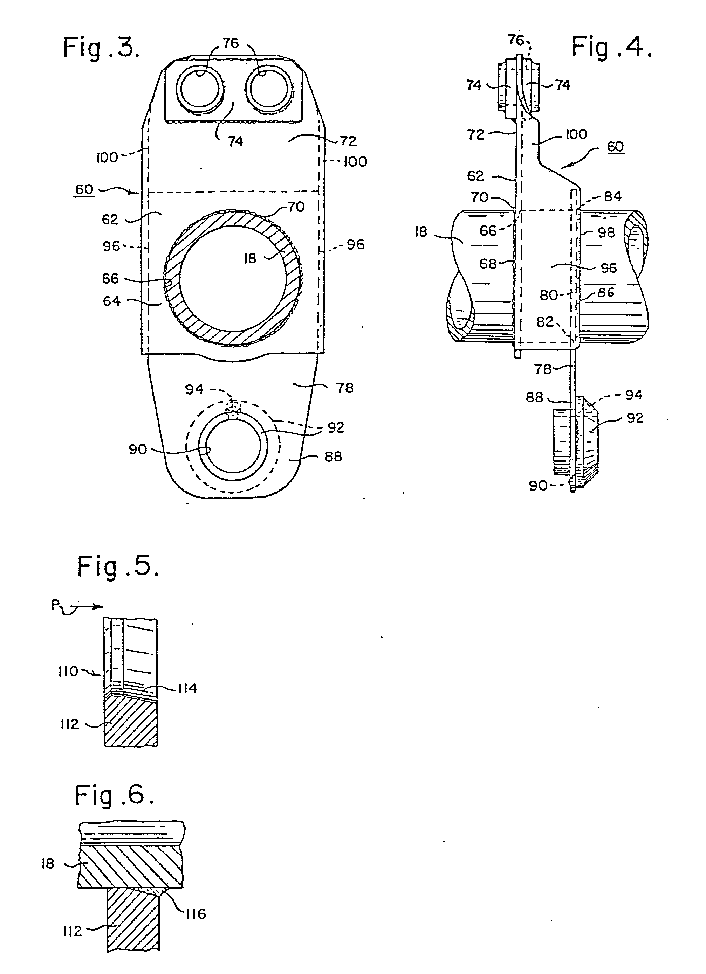

In an effort to resolve some of the complications resulting from these bending forces and to provide an overall structure which is easier to manufacture and less expensive than the prior art spider 12, this invention is directed to a preferred spider 60 as shown in Figures 3—6. The preferred spider 60 is basically formed of AISI 80X steel plate which is about 5.59 mm thick. AISI 80X steel has a strength of about 5516 bar. This steel is preferred for a number of reasons which will be explained hereinbelow.

Specifically, the spider 60 includes a pivoting end support plate 62 having an opening in a first end 64 thereof in the form of a circular hole 66. The pivoting end support plate 62 is secured to an axle 18 at a first axial location 68 thereon as the edge 70 of the hole 66 is welded to the axle 18. The pivoting end support plate 62 is oriented to extend radially, outwardly from the axle 18 so that it is perpendicular to the axis of the axle 18.

The pivoting end support plate 62 includes an extended end 72 having means thereon for supporting pivot pins on which the brake shoes can be mounted. Specifically, a pair of stamped and formed reinforcing plates 74 are welded to the end 72 to include a pair of holes into which the pivot pins can be fit in a manner well known in the art and as described hereinabove. Obviously, it would be possible to eliminate the holes through the pivoting end support plate 62 if it were determined to be advantageous to include reinforcing plates which have integrally formed posts thereon in the manner described hereinabove.

An actuation support plate 78 also has an opening therethrough at a first end 80 in the form of a circular hole 82. The actuation support plate 78 is mounted on the axle 18 by the edge of the hole 82 being welded at 84 to the axle 18 at a second axial location 86 thereon which is separated from the first axial location 68. The actuation support plate 78 extends radially, outwardly of the axle 18 to be perpendicular to the axis of the axle 18. An extended end 88 of the actuation support plate 78 is at a circumferential location about the axle 18 which is directly opposite the extended end 72 of the pivoting end support plate 62. A hole 90 in the end 88 receives a powdered metal bushing fitting 92 which is capable of supporting the brake actuation shaft of the type mentioned hereinabove. There may be included in the bushing 92 an opening 94 to provide means for lubricating the bearing surface.

As thus explained, the preferred spider 60 includes the plates 62 and 78 which are parallel but axially separated by a proper distance for the ends thereof to be aligned with the pivot pins and the bearing support for the actuation shaft in the same offset manner as described hereinabove for the prior art spider 12. However, with the plates 62 and 78 being perpendicular to the axle 18, they are aligned with the forces acting on the pivot pins and the support for the cam actuator so that the plates 62 and 78 are not subjected to the bending moment that existed in the prior art spider 12 where the support for the ends was not directly aligned with the forces acting thereon.

Although the preferred spider 60, as thus described, could satisfactorily support some brake installations, there do exist some problems with the concept of simply providing two plates for a brake spider. Specifically, there would be problems in properly aligning and spacing the plates 62 and 78 during their installation on the axle 18. Therefore, the pivoting end support plate 63 is provided two side plates 96 which are integrally joined at the outer end thereof and formed perpendicularly thereto to extend along the sides of the axle 18. The extended edges 98 of each side plate 96 are welded to the outer edges of the actuation support plate 78 to provide overall integrity for the spider 60 and insure proper alignment and spacing of the plates 62 and 78. It will be noted that a portion 100 of each plate 96 extends along the edges of the pivoting end support plate 62 to be adjacent its extended end 72. The portions 100 being formed in this manner add needed rigidity to the pivoting end support plate 62 since, as mentioned hereinabove, the resulting forces acting on the pivot pins are greater than the resulting forces acting on the extended end 88 of the actuation support plate 78.

The side plates 96 also provide an additional function of keeping the plates 62 and 78 in proper alignment relative to the axle 18 throughout the welding along the edges 70 and 84 of the holes therethrough. Specifically, as mentioned above, the welding along these outer edges provides a sufficient bonding of the material to support the plates on the axle 18. However, by adding heat to only one side of each plate 62 and 78, the plate would tend to warp during the welding process which could result in a loss of the perpendicular alignment described hereinabove and needed for the proper resolution of the forces acting thereon. Therefore, the side plates 96 facilitate installation and alignment of the plates on the axle 18 and insure that their alignment will be maintained throughout the welding process by providing sufficient resistance to the warping which would otherwise occur.

As thus described, the spider 60 may or may not be lighter than the spider 12 but is definitely less expensive to provide than is the prior art spider 12. A complicated forging die to form the spider 12 is obviously more expensive than the simple blanking or forming dies needed to form the plates 62 and 78. However, it is more significant that it would be more expensive to heat and forge the metal to provide a blank spider than it would be to simply stamp and form sheet metal. Another major savings in costs occurs during the manufacturing steps needed to convert the blank spider to a finished product.

Although the holes 16, 40 and 52 in the prior art spider 12 are basically formed during the forging, a machining step is required for properly preparing the surfaces to receive the elements therein. The machining operations significantly add to the overall cost of providing the finished spider 12. The formation of the holes 76, 66 82 and 90 in the preferred spider 60, on the other hand, is accomplished through a simpler, less expensive punching operation. Only the machining of the holes 76 is required and this is accomplished at the same time the holes in the reinforcing plate 74 are machined. Therefore, some significant machine operations are eliminated by the use of the spider 60 eliminating some of the manufacturing costs required for the prior art spider 12.

As seen in Figure 5 and 6, the punching operation affects the shape of the edge of the holes formed in the plates utilized to produce the spider 60. When the punching die is moved in the direction as shown by the arrow P, the metal blank tends to tear away from the stationary metal so that the trailing edge of a hole 110 formed in a piece of sheet metal 112 has a beveled surface as indicated at 114. Accordingly, as seen in Figure 6, when the welding is performed to join the plate 112 to the axle 18, the plate is oriented so that the beveled side is positioned toward the welding machine. As a result, the weld 116, similar to the welds 70 and 84 mentioned hereinabove, will join the plate 112 to the axle 18 with the weld material filling in the area between the outer surface of the axle 18 and the bevel surface 114 to provide overall integrity to the joining of the plate to the axle.

One might ask why a single piece of plate steel couldn't be formed with an offset like the spider 12 to save the above-mentioned manufacturing costs. Besides the obvious problems of supporting such a spider during welding to the axle, the above-mentioned bending forces which result from the metal not being aligned with the forces acting on the ends of the spider would destroy the thin, "flat" steel used in the spider 60. To withstand these forces, the basic plate material made of the same steel having a yield strength of about 5516 bar would have to be thicker and some reinforcing flanges would have to be formed along the edges to prevent bending. The resulting increase in cost of material and forming prevent this design from being considered as a reasonable alternative in light of the advantages found in the preferred spider 60.

Although the embodiment discussed hereinabove has preferably been formed of steel plate having a yield strength of 5516 bar, other steel plate could be utilized. For example, steel plate having a yield strength of only 2896 bar could be employed but would have to be thicker to be able to withstand the same forces. Although this steel has been found to be less expensive per unit of weight than the preferred steel, the spider formed with this material would be more expensive since the overall increase in weight units material required is greater than the cost savings per weight unit. Obviously, if the relative costs of these different steels were to change, a new evaluation could be made to determine which steel could be most economically employed for each particular embodiment.

It should be noted that the prior art spiders disclosed in the patents mentioned hereinabove and the preferred and alternative embodiments of the invention all utilize a pair of pivot pins for supporting one end of the brake shoes. However, there are some drum brake configurations which employ a single centrally located pivot pin to support both dual web brake shoes. It will be clear to those skilled in the art that if such a configuration also requires the opposite ends of the spider to be axially offset, one from the other, the present invention could readily be employed for such brakes. Although the specific forces acting on each plate might be different, there is sufficient information provided hereinabove to enable one to design such a spider without departing from the invention as claimed.

**Claims**

1. A spider (60) for a brake to be utilized at the wheel end of a heavy duty truck or trailer axle (18), said brake including a drum (20) mounted for rotation with the wheel and a pair of brake shoes (22) including a dual web support structure (24) centrally located thereon, one end of said web support structure (24) at each said brake shoe (22) being supported by pivot pin means (50) and the other end of said dual web support structure (24) of each said brake shoe (22) including means (36) to be acted upon by a brake actuation means (30), said brake actuation means (30) being supported at a support location axially separated from the central location of said dual web support structure (24) of said brake shoe (22), said spider including:

a pivoting end support plate (62) having an opening (66) at one end thereof for the receipt of the axle (18) therein, said pivoting end support plate (62) being secured to said axle (18) at a first axial location thereon at said opening (66) to extend radially outwardly from said axle (18), said pivoting end support plate (62) having an extended end (72) thereof for supporting said pivot pin means (50); and

an actuation support plate (78) having an opening (82) at one end thereof, said actuation support plate (78) being mounted on said axle (18) at said opening (82) at a second axial location which is axially separated from said first axial location, said actuation support plate (78) being mounted to extend radially outwardly of said axle (18) to position an extended end thereof at a circumferential location about said axle (18) which is directly opposite said extended end (72) of said pivoting end support plate (62), said actuating support plate (78) having at its said extended end a means (125) for supporting said actuation means (30),

characterized in that said pivoting end support plate (62) and said actuation support plate (78) are secured to each other by a pair of side plates (96) extending axially at each side of the axle (18) adjacent said openings (66, 82).

2. The spider as set forth in claim 1, characterized in that an edge around said opening (66) of said pivoting end support plate (62) is circular, is closely received about said axle (18) and welded thereto.

3. The spider as set forth in claim 1 or 2, characterized in that an edge around said opening (82) of said actuation support plate (78) is circular, is closely received about said axle (18) and welded thereto.

4. The spider as set forth in claim 1, characterized in that said side plates (96) are integrally joined to one of said pivoting end support plate (62) and said actuation support plate (78) and extend therefrom to be welded to the other of said pivoting end support plate (62) and said actuation support plate (78).

5. The spider as set forth in claim 4, characterized in that said side plates (96) are integrally formed with said pivot support plate (78) and include a base portion (100) remote from said opening (82) therein and adjacent said extended end (72) thereof to provide additional strength adjacent said extended end (72) thereof for supporting said pivot pin means (50).

## Patentansprüche

1. Bremsträger (60) für eine am Radende der Achse (18) einer Schwerlast-Zugmaschine oder eines Schwerlast-Anhängers zu verwendende Bremse, die eine drehbar mit dem Rad angebrachte Trommel (20) und zwei Bremsschuhe (22) mit einer zentral angebrachten Doppelsteg-Trägerstruktur (24) enthält, wobei ein Ende der Doppelsteg-Trägerstruktur (24) an jedem der Bremsschuhe (22) von einer Lagerzapfenvorrichtung (50) gehalten wird, während ihr anderes Ende Mittel aufweist, auf die eine Bremsbetätigungsvorrichtung (30) einwirkt, die axial getrennt vom zentralen Anbringungsort der Doppelsteg-Trägerstruktur (24) des Bremsschuhs (22) gehalten ist, wobei der Bremsträger folgendes enthält:

eine mit einer Öffnung (66) an einem Ende zur Aufnahme der Achse (18) versehene Lagerträgerplatte (62), die an der Achse (18) an einer ersten Axialposition bei der Öffnung (66) so befestigt ist, daß sie radial nach außen von der Achse (18) absteht und die ein verlängertes Ende (72) zum Halten der Lagerzapfenvorrichtung (50) aufweist, und

eine an einem Ende mit einer Öffnung (82) versehene Betätigungsträgerplatte (78), die bei der Öffnung (82) und einer zweiten axialen Position, die axial von der ersten Axialposition getrennt ist, an der Achse (18) befestigt ist und die radial nach außen abstehend so an der Achse (18) befestigt ist, daß ein abstehendes Ende an einer Umfangsposition bezüglich der Achse (18) liegt, die dem verlängerten Ende (72) der Lagerträgerplatte (62) direkt gegenüber liegt, wobei die Lagerträgerachse (78) an diesem verlängerten Ende mit einer Vorrichtung (125) zum Tragen der Bremsbetätigungsvorrichtung (30) versehen ist, dadurch gekennzeichnet, daß die Lagerträgerplatte (62) und die Betätigungsträgerplatte (78) mit Hilfe von zwei Seitenplatten (96) aneinander befestigt sind, die sich auf jeder Seite der Achse (18) angrenzend an die Öffnungen (66, 82) axial erstrecken.

2. Bremsträger nach Anspruch 1, dadurch gekennzeichnet, daß eine sich um die Öffnung (66) der Lagerträgerplatte (62) erstreckender Rand kreisförmig ist, eng um die Achse (18) herum verläuft und mit dieser verschweißt ist.

3. Bremsträger nach Anspruch 1 oder 2, dadurch gekennzeichnet, daß ein um die Öffnung (82) der Betätigungsträgerplatte (78) herum verlaufender Rand kreisförmig ist, eng um die Achse (18) herum verläuft und mit dieser verschweißt ist.

4. Bremsträger nach Anspruch 1, dadurch gekennzeichnet, daß die Seitenplatten (96) einstückig mit der Lagerträgerplatte (62) oder der Betätigungsträgerplatte (78) verbunden sind und zum Verschweißen mit der jeweils anderen Platte davon abstehen.

5. Bremsträger nach Anspruch 4, dadurch gekennzeichnet, daß die Seitenplatten (96) einstückig mit der Betätigungsträgerplatte (78) ausgebildet sind und einen Basisabschnitt (100) enthalten, der von der Öffnung (82) entfernt und angrenzend an das verlängerte Ende (72) verläuft, damit angrenzend an das verlängerte Ende (72) zum Tragen der Lagerzapfenvorrichtung (50) eine zusätzliche Festigkeit erhalten wird.

## Revendications

1. Armature (60) pour frein, pour être utilisée à l'extrémité côté roue d'un essieu (18) d'un camion poids lourd ou d'une remorque, ce frein comprenant un tambour (20) monté pour tourner avec la roue, et une paire de mâchoires de frein (22) comprenant une structure support à double flasque (24), disposée de façon centrale sur celui-ci, une extrémité de la structure support à flasques (24) de chaque mâchoire (22) de frein étant supportée par un axe de pivotement (50), et l'autre extrémité de la structure support à double flasque (24) de chacune des mâchoires de frein (22) comprenant des moyens (36) actionnables par une commande de frein (30), cette commande de frein (30) étant supportée en un point support axialement séparé du point central de la structure support à double flasque (24) de la mâchoire de frein (22), cette armature comprenant:

une plaque support d'extrémité pivotante (62), munie d'une ouverture (66) à l'une de ses extrémités pour y recevoir l'essieu (18), cette plaque support d'extrémité pivotante (62) étant fixée à l'essieu en une première position axiale sur celui-ci au niveau de l'ouverture (66), pour s'étendre radialement vers l'extérieur à partir de l'essieu (18), la plaque support d'extrémité pivotante (62) possédant une extrémité prolongée (72) pour supporter les axes de pivotement (50); et

une plaque support d'actionnement (78) ayant une ouverture (82) à l'une de ses extrémités, cette plaque support d'actionnement (78) étant montée sur l'essieu (18) au niveau de l'ouverture (82), en une seconde position axiale qui est axialement séparée de la première position axiale, la plaque support d'actionnement (78) étant monté pour s'étendre radialement vers l'extérieur à partir de l'essieu (18) pour positionner une extrémité prolongée de celle-ci en un point d'un cercle centré sur l'essieu (18) qui est directement opposé à l'extrémité prolongée (72) de la plaque support d'extrémité pivotante (62), la plaque support d'actionnement (78) ayant à son extrémité prolongée des moyens (125) pour supporter les moyens d'actionnement (30),

caractérisé en ce que la plaque support d'extrémité pivotante (62) et la plaque support d'actionnement (78) sont fixées l'une à l'autre par une paire de plaques latérales (96) s'étendant parallèlement à l'axe de chaque côté de l'essieu (18) et adjacentes aux ouvertures (66, 82).

2. Armature selon la revendication 1, caractérisée en ce qu'un bord autour de l'ouverture (66) de la plaque support d'extrémité pivotante (62) est circulaire, est monté sans jeu autour de l'essieu (18) et y est soudé.

3. Armature selon la revendication. 1 ou 2, caractérisée en ce qu'un bord autour de l'ouverture (82) de la plaque support d'actionnement (78) est circulaire, est monté sans jeu autour de l'essieu (18) et y est soudé.

4. Armature selon la revendication caractérisée en ce que les plaques latérales (96) reliées en une seule pièce à l'une des plaques support d'extrémité pivotante (62) et plaque support d'actionnement (78) et s'étendent à partir de celles-ci pour être soudées à l'autre des plaques support d'extrémité pivotante (62) et plaque support d'actionnement (78).

5. Armature selon la revendication 4, caractérisée en ce que les plaque latérales (96) sont formées en une seule pièce avec la plaque support d'extrémité pivotante (78) et comprennent une partie de base (100) éloignée de l'ouverture (82) et adjacente à l'extrémité prolongée (72), pour donner une résistance additionnelle à l'extrémité prolongée adjacente (72) pour supporter l'axe de pivotement (50).

**0 064 215**

Fig.1.
Prior Art

Fig.2.
Prior Art

1

Fig.3.

Fig.4.

Fig.5.

Fig.6.

2